# EUROPEAN PATENT SPECIFICATION

(11) **EP 1 159 906 B1**
(45) Date of publication and mention of the grant of the patent: **26.11.2003**
(21) Application number: 01304543.0
(22) Date of filing: 23.05.2001
(51) Int. Cl.: A47J 31/40, G07F 13/06

(54) **Dispensing apparatus**
Ausgabevorrichtung
Machine à débiter

(30) Priority: 24.05.2000 GB 0012659
(43) Date of publication of application: 05.12.2001
(73) Proprietor: Westomatic Catering Systems Limited, Newton Abbott, TQ12 4TZ (GB)
(72) Inventor: Avers, Luke, 3705 LZ Zeist (NL)
(74) Representative: Harrison, Ivor Stanley

(56) References cited:
- DE-U- 29 602 555
- GB-A- 2 271 758
- US-A- 2 812 879
- US-A- 3 400 861
- US-A- 5 287 993
- US-A- 6 056 169

## Description

This invention relates to apparatus for dispensing material in particulate form, especially where the material is to be dispensed in metered quantities in conditions under which it has a tendency to soften or melt.

There is a particular problem with vending machines for hot beverages in the provision of cappuccino coffee, in that the chocolate granules or powder particles which are intended to be sprinkled on the milk/topping foam which floats on the surface of the coffee tend to soften and coagulate or even to melt under the humid conditions which obtain in the manifold and water-dispensing station of the machine. At best, this results in a sub-standard product and at worst causes blockages and resulting malfunction in the machine. A ventilation system for a coffee machine is described in DE29602555, in which a light airstream is passed through the transport channel in an attempt to keep the powder dry. It has also proved difficult in practice to apply the relatively small amount of chocolate powder required with acceptable volume accuracy.

It is an object of the present invention to provide apparatus which overcomes the above problems and enables the consumer to enjoy a conventional cappuccino coffee drink provided by a vending machine.

Accordingly, in one aspect the invention provides apparatus for dispensing material in particulate form, the apparatus comprising a reservoir for storing a quantity of the material means for delivery of the material to a dispensing port, and ventilation means in communication with the dispensing port, whereby an airstream is caused to flow through the dispensing port together with material being dispensed, in which the delivery means comprises a screw feed device and the reservoir includes agitation means to maintain the particulate material in favourable form for dispensing, the agitation means comprising a reticulated agitation member mounted in the reservoir for reciprocating movement orthogonal to the rotational axis of the screw-feed device, the agitation member being engaged at one end between adjacent flights of the screw-feed device.

The apparatus is particularly for use where the material to be dispensed is susceptible of becoming softened or coagulated or of melting under the ambient conditions of dispensing, for example where the material is granular or powdered chocolate for sprinkle application to the topping foam on the surface of coffee for providing cappuccino coffee from a beverage vending machine. For such a purpose, the delivery means is activatable on demand by the user and delivers a metered or predetermined quantity of material for each use cycle and the ventilation means preferably operates continuously while the apparatus or the machine in which it is installed is in commission. The airstream acts to prevent access by warm air or steam to the dispensing port and through the dispensing port to the delivery means and reservoir. Preferably, the airstream is directed towards the target zone for the particulate material, for example the cappuccino topping foam, whereby the airstream additionally acts to entrain and guide the material to the target and to prevent the material from random scattering around the periphery of the target. In the embodiment of a beverage vending machine, the beverage cup is preferably placed directly below the dispensing port and the airstream is directed axially through the port towards the zone occupied by the cup.

The screw-feed device may be operated by an electric motor through a suitable gearing arrangement. Preferably, the screw-feed device comprises a small diameter auger and the motor comprises a low-voltage DC motor which, operating through a high reduction gearing arrangement, provides for acceptable dosing volume accuracy. The motor output drive shaft and the auger are preferably operatively connected together via bevel gears, which facilitate disassembly of the reservoir and delivery means from the motor for cleaning and servicing purposes. The motor is preferably mounted via a suitable bracket directly or indirectly to a base chassis, for example of a vending machine.

As the screw-feed device rotates, the agitation member, which is preferably formed from a springy or resilient material, is subject to a rising and falling motion as the engagement end thereof is caused to ride up and over the flights as they advance. In this case, the end of the agitation member which is engaged between the flights of the screw-feed device will also be subject to a degree of reciprocating movement along the rotational axis of the screw-feed device.

The ventilation means may comprise a fan driven by a low-voltage electric motor, the fan being preferably mounted at one end of a cylindrical ventilation duct co-axially with the axis of the dispensing port, which may form a dispensing nozzle at the other end of the ventilation duct, so that the airstream generated by the fan passes to the dispensing port through the duct, preferably between longitudinally-disposed fins mounted within the duct for creating a laminar flow. The airstream through the duct acts to prevent the ingress of warm air or steam into the dispensing port, delivery means and reservoir. Furthermore, it can inhibit the entry of other environmental contaminants, whether gaseous or particulate, to the apparatus and reservoir contents. The laminar flow resulting from the presence of the fins is advantageous in that it limits problems of turbulence and vortexing in the ventilation duct and so inhibits undue scattering of the particulate material on dispensing.

Conveniently, the duct is mounted adjacent the reservoir and the fan is mounted in a lid pivotably connected to the motor housing or mounting bracket and which also acts as an openable closure means for the reservoir, to enable it to be re-charged with particulate material. Optionally, some of the airstream air may be arranged to bleed into the reservoir to assist in maintaining the material therein cool and dry.

The component parts or sub-assemblies of parts for use in apparatus according to the invention are preferably arranged to be readily disassembled for cleaning and servicing purposes and the entire apparatus when assembled complies with the relatively small space requirements of beverage vending machines.

In another aspect, the invention provides a method of dispensing a material in particulate form, especially a material which is susceptible of becoming softened or of melting under ambient dispensing conditions in metered quantities, the method comprising delivering said material, preferably in metered quantities, from a storage reservoir to a dispensing port and, at least while said delivering is taking place, causing an airstream to pass through said delivery port together with said material being delivered thereto, whereby the material exits from the dispensing port entrained in said airstream.

Embodiments of the invention will now be described by way of example with reference to the accompanying drawings, of which:
Figure 1 is a sectional view of an entire apparatus for dispensing granulated chocolate in a hot drinks vending machine and
Figure 2 is an exploded perspective view of parts of the apparatus as shown in Figure 1.

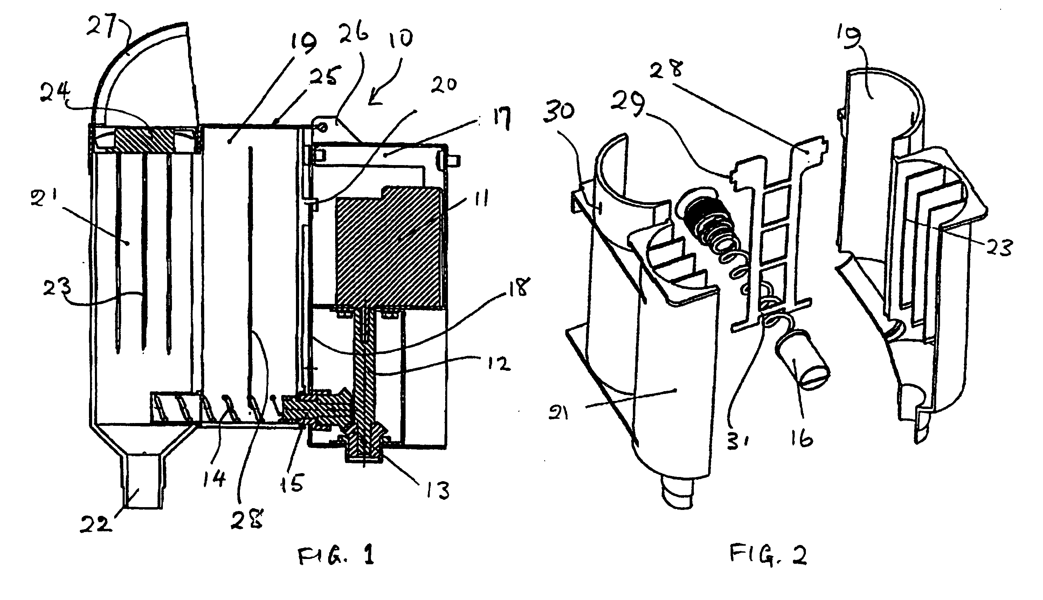

With reference first to Figure 1, the apparatus as shown generally at 10 consists of an electric motor 11 having an output drive shaft 12 connected through bevel gears 13 to an auger 14. The auger 14 is fitted at its proximal end to a base bearing 15 and at its distal end to a remote bearing 16, shown more clearly in Figure 2.

The motor 11 is mounted on a bracket 17 attached to the chassis or main structure of the vending machine (not shown) and is protected by side members (not shown) and by a front cover member 18. A cylindrical reservoir canister 19 is attached to the front cover member 18 by a bracket 20 having a depending tongue which engages through a slot formed in the cover member; the auger subassembly including the bearings and bevel gear and which is journaled in the lower end of the reservoir canister also fits through an aperture in the front cover member 18, the aperture in this case being keyhole-shaped, whereby the reservoir canister is initially offered to the front cover member so that the brackets 20 and the auger bearing 15 pass through the respective apertures, whereafter the canister is lowered to its position of engagement.

A cylindrical ventilator tube 21 is attached to the remote side of the reservoir canister from the motor, the distal end of the auger extending into the ventilator tube and terminating above a frusto-conical portion leading to an exit nozzle or spout 22 which engages in the centre hole of the main manifold of the vending machine, immediately above the location for positioning a cup to be filled. The ventilator canister contains axial fins 23 which terminate above the auger exit and which assist in creating laminar downward airflow from a fan 24 carried in a cover unit 25 which also acts to close the reservoir canister 19 and is hinged to a bracket 26 attached to the motor mounting bracket 17. The fan 24 is provided with a protective hood 27 which acts as an inlet for air to the fan. Conveniently, the fan may be of the type commonly used for cooling computer units and the like.

The storage canister 19 contains an agitator 28 which is mounted at its upper end via lugs 29 in slots 30 formed in the walls of the canister. The agitator has elongate side members joined by spaced apart cross members to form a reticulated arrangement, the lowermost cross member 31 being engaged, as shown in Figure 2, between adjacent flights of the auger 14. The agitator 28 is cut from a sheet of springy material whereby, as the flights of the auger advance (to the left as shown in Figure 1), the agitator is subject to out-of-plane deformation until it overrides the flight which is bearing upon it and springs back into the gap between that flight and the next immediately behind. The agitator may also be subject to a degree of reciprocating vertical movement in the manner of a cam follower bearing on a rotating cam profile.

In use, the fan 24 operates constantly to maintain ventilation in the ventilator tube 21 and through the outlet nozzle 22 thereof, thereby denying access within the tube, and thus to the auger and storage reservoir, of steam or hot air from elsewhere within the vending machine housing. On a consumer selecting cappuccino coffee, cappuccino foam is initially dispensed to the cup followed by black coffee and, thereafter, the motor 11 is actuated to cause a metered quantity of chocolate granules or powder to pass from the reservoir 19 to the auger outlet and thence to be passed direct to the foam under the influence of the airstream generated by the fan 24 and passing through the nozzle 22.

The entire apparatus can be fitted within the space requirements of a vending machine and can be easily disassembled for cleaning and servicing purposes. All electrical parts are mounted to the motor bracket and are thus attached to the vending machine housing; the auger assembly can be fitted by means of a bayonet attachment, whereby it can readily be removed as a subassembly, the auger gear and motor dry shaft gear being disengaged merely by pulling the former axially away from the latter, by virtue of the bevel gear arrangement.

The apparatus according to this invention could also be used in other applications not directly related to drinks vending machines. Thus, any application requiring the controlled dispensing of a material under the regulated environmental conditions provided by the ventilation means could benefit from the apparatus.

## Claims

1. Apparatus for dispensing material in particulate form, the apparatus comprising a reservoir (19) for storing a quantity of the material; means for delivery of the material to a dispensing port (22), and ventilation means (24) in communication with the dispensing port, whereby an airstream is caused to flow through the dispensing port together with material being dispensed, in which the delivery means comprises a screw-feed device (14) and the reservoir (19) includes agitation means (28) to maintain the particulate material in flowable form for dispensing, **characterised by** the agitation means (28) comprising a reticulated agitation member mounted in the reservoir (19) for reciprocating movement orthogonal to the rotational axis of the screw-feed device (14), the agitation member being engaged at one end between adjacent flights of the screw-feed device.

2. Apparatus according to claim 1, in which the apparatus is part of a beverage vending machine and the delivery means is activatable on demand by a user of the machine and delivers a metered or predetermined quantity of material for each use cycle.

3. Apparatus according to claim 1 or claim 2, in which the apparatus includes means (23) to direct the airstream towards the target zone for the particulate material.

4. Apparatus according to any preceding claim, in which the screw-feed device (14) is operated by an electric motor (11) through a gear train (13).

5. Apparatus according to claim 4, in which the screw-feed device (31) comprises a small diameter auger (14) and the motor (11) comprises a low-voltage DC motor which operates through a high reduction gear train (13).

6. Apparatus according to claim 5, in which the motor output drive shaft (12) and the auger (14) are operatively connected together via bevel gears (13).

7. Apparatus according to any preceding claim, in which the ventilation means comprises a fan (24) driven by a low-voltage electric motor, the fan being mounted at one end of a cylindrical ventilation duct co-axially with the axis of the dispensing port, some of the airstream air being arranged to bleed into the reservoir (19).

## Patentansprüche

1. Vorrichtung zum Ausgeben von Material in partikulärer Form, wobei die Vorrichtung aufweist: ein Reservoir (19) zum Speichern einer Menge des Materials, eine Einrichtung zum Zuführen des Materials zu einem Abgabeanschluss (22), und einer Ventilationseinrichtung (24) in Kommunikation mit dem Ausgabeanschluss, wodurch bewirkt wird, dass ein Luftstrom zusammen mit dem auszugebenden Material durch den Ausgabeanschluss strömt, wobei die Zuführeinrichtung eine Schneckenfördereinrichtung (14) aufweist und das Reservoir (19) eine Mischeinrichtung (28) enthält, um das partikuläre Material zur Ausgabe in einer fließfähigen Form zu halten, **dadurch gekennzeichnet, dass** die Mischeinrichtung (28) ein gitterförmiges Mischbauteil aufweist, das für eine Hin- und Herbewegung senkrecht zur Drehachse der Schraubenzuführeinrichtung (14) in dem Reservoir (19) montiert ist, wobei das Mischbauteil mit einem Ende zwischen benachbarten Schraubengängen der Schraubenzuführeinrichtung eingreift.

2. Vorrichtung nach Anspruch 1, wobei die Vorrichtung Teil einer Getränkeverkaufsmaschine ist und die Zuführeinrichtung bei Aktivierung der Maschine durch einen Benutzer aktivierbar ist und für jeden Benutzungszyklus eine abgemessene oder vorbestimmte Menge an Material liefert.

3. Vorrichtung nach Anspruch 1 oder Anspruch 2, wobei die Vorrichtung eine Einrichtung (23) aufweist, um den Luftstrom in Richtung auf die Zielzone für das partikuläre Material zu richten.

4. Vorrichtung nach einem der vorhergendenden Ansprüche, bei der die Schraubenzuführeinrichtung (14) durch einen Elektromotor (11) über ein Getriebe (13) angetrieben wird.

5. Vorrichtung nach Anspruch 4, bei der die Schraubenzuführeinrichtung (31) einen Schnecke (14) mit kleinem Durchmesser aufweist und der Motor (11) einen Niederspannungs-Gleichspannungsmotor einschließt, der über ein Getriebe (13) mit hoher Übersetzung arbeitet.

6. Vorrichtung nach Anspruch 5, bei der die Motorausgangsantriebswelle (12) und die Schnecke (14) über ein Kegelradgetriebe (13) funktional miteinander verbunden sind.

7. Vorrichtung nach einem der vorhergehenden Ansprüche, bei der die Ventilationseinrichtung ein Gebläse (24) aufweist, das durch einen elektrischen Niederspannungsmotor angetrieben wird, wobei das Gebläse an einem Ende von einem zylindrischen Ventilationskanal koaxial mit der Achse von dem Ausgabeanschluß montiert ist, wobei ein Teil der Luft des Luftstroms ausgestaltet ist, um in das Reservoir (19) zu blasen.

## Revendications

1. Appareil pour débiter une matière particulaire, cet appareil comprenant un réservoir (19) pour emmagasiner une quantité de la matière ; un moyen pour fournir la matière à un orifice de distribution (22), et un moyen de ventilation (24) en communication avec l'orifice de distribution, de façon à faire circuler un courant d'air à travers l'orifice de distribution en même temps que la matière débitée, dans lequel le moyen de fourniture comprend un dispositif d'alimentation à vis (14) et le réservoir (19) comprend un moyen d'agitation (28) pour maintenir la matière particulaire sous une forme où elle peut circuler qui permet sa distribution, **caractérisé en ce que** le moyen d'agitation (28) comprend un élément d'agitation réticulé monté dans le réservoir (19) pour se déplacer d'un mouvement de va-et-vient orthogonal à l'axe de rotation du dispositif d'alimentation à vis (14), l'élément d'agitation étant engagé à une de ses extrémités entre des spires adjacentes du dispositif d'alimentation à vis.

2. Appareil selon la revendication 1, dans lequel l'appareil constitue une partie d'une machine de vente de boisson et le moyen de fourniture peut être activé à la demande par un utilisateur de la machine et délivre une quantité mesurée ou prédéterminée de matière à chaque cycle d'utilisation.

3. Appareil selon la revendication 1 ou la revendication 2, dans lequel l'appareil comprend un moyen (23) pour diriger le courant d'air vers la zone cible de la matière particulaire.

4. Appareil selon l'une quelconque des revendications précédentes, dans lequel le dispositif d'alimentation à vis (14) est actionné par un moteur électrique (11) par l'intermédiaire d'un train d'engrenages (13).

5. Appareil selon la revendication 4, dans lequel le dispositif d'alimentation à vis (31) comprend une vrille (14) de petit diamètre et le moteur (11) comprend un moteur à courant continu basse tension qui agit par l'intermédiaire d'un train d'engrenages (13) à forte réduction.

6. Appareil selon la revendication 6, dans lequel l'arbre de sortie menant (12) du moteur et la vrille (14) sont reliés ensemble de façon opérationnelle par l'intermédiaire d'engrenages coniques (13).

7. Appareil selon l'une quelconque des revendications précédentes, dans lequel le moyen de ventilation comprend un ventilateur (24) entraîné par un moteur électrique basse tension, le ventilateur étant monté à une extrémité d'un conduit de ventilation cylindrique coaxialement à l'axe de l'orifice de distribution, une partie du courant d'air étant destinée à fuir dans le réservoir (19).
